# EUROPEAN PATENT APPLICATION

(11) **EP 2 218 538 A1**
(43) Date of publication of application: **18.08.2010**
(21) Application number: 10001228.5
(22) Date of filing: 05.02.2010
(51) Int. Cl.: B23K 26/03, B23K 26/24

(54) **Laser welding method, computer program product and apparatus**

(30) Priority: 13.02.2009 JP 2009030648
(71) Applicant: Mazda Motor Corporation, Aki-gun Hiroshima 730-8670 (JP)
(72) Inventor: Tanaka, Chikara, Aki-gun Hiroshima 730-8670 (JP); Kitahara, Yoichiro, Aki-gun Hiroshima 730-8670 (JP)
(74) Representative: Müller-Boré & Partner Patentanwälte

(57) **Abstract**

A laser welding method comprises a step of welding upper and lower metal plates (W1,W2), a step of picking up an image of a molten pool near a molten hole from the side of the upper metal plate during an execution of the welding step, a step (steps S3, S5) of determining whether a welding state of the metal plates is proper or not by analyzing a generation state of the molten pool based on the image picked up in the picking-up step, and a step (steps S6, S7) of adjusting at least one of a parameter of the irradiated laser beams (LB) and a feeding speed of the filler (X) wire so that the welding state of the metal plates becomes proper in case the welding state determined in said determining step is not proper.

## Description

The present invention relates to a laser welding method, computer program product and apparatus of a pair of flat-plate-shaped metal plates overlapped vertically.

A laser welding has been recently used as a welding method of a pair of flat-plate-shaped metal plates overlapped vertically. In the laser welding, laser beams is irradiated toward a surface of an upper metal plate so as to move along a welding path in such a manner that a laser-beam irradiated portion of the upper and lower metal plates is molten and a line-shaped welding bead is generated.

Herein, in general, the respective facing faces of the two metal plates are not flat completely, so some clearance between the metal plates is generated. Further, this clearance may not be uniform, so there is a concern that the molten metal of the upper metal plate would not lower to the lower metal plate beyond the above-described clearance at a position where the clearance is relatively large. Consequently, some incomplete welding would occur.

Japanese Patent Laid-Open Publication No. 2006-159234 discloses a technology which may solve the above-described problem, in which a filler wire is fed to the beam-laser irradiated portion such that its tip follows the laser beams irradiated. According to this technology, the filler wire is also molten in addition to the metal plate and thereby the total amount of molten metal is increased. Consequently, the molten metal may lower to the lower metal plate properly beyond the above-described clearance, thereby preventing the above-described incomplete welding.

The above-described publication also discloses a variable control of the feeding amount of filler wire according to the degree of the clearance between the metal plates. Specifically, based on the recognition that the feeding load of filler wire from a filler-wire feeding device depends on the degree of the clearance, the feeding load of filler wire from the filler-wire feeding device is detected and the feeding amount of filler wire is variably controlled according to this feeding load detected. Consequently, the proper welding may be provided despite some change of the clearance (the tolerance of clearance may be improved). Meanwhile, some methods of the welding-state detection are known as described in Japanese Patent Laid-Open Publication Nos. 2002-239731 and 2006-082129, for example.

According to the technology of the above-described publication, however, since it may be necessary that the tip of the filler wire in a non-molten state is inserted into the above-described molten hole or pool sufficiently to detect the feeding load of the filler wire properly, there is a concern that forming a welding bead or the like would deteriorate.

An object of the present invention is to allow proper welding of work elements at least partly overlapped with the clearance therebetween, without detecting the feeding load of the filler wire.

The object is solved according to the present invention by the features of the independent claims. Preferred embodiments of the present invention are subject of the dependent claims.

According to the present invention, there is provided a laser welding method of a pair of work elements at least partly overlapped with a clearance therebetween, comprising: a step of welding an overlapped portion of first and second work elements with at least one laser beam and a filler wire, in which the laser beam is irradiated toward a surface of the first work element so as to move substantially along a welding path and the filler wire is fed to a laser-beam irradiated portion of the first work element such that a tip thereof follows the laser beam(s) irradiated in such a manner that the laser-beam irradiated portion of the first work element is molten such that a molten hole which penetrates the first work element is generated and the tip of the filler wire is molten, so that a molten pool in which molten metal of the first work element and the filler wire is collected around the molten hole can be generated behind the laser-beam irradiated portion in such a manner that the molten metal of the first work element and the filler wire flows or passes across or crosses the clearance between the first and second work elements; a step of picking up an image of the molten pool near the molten hole from the side of the first work plate during an execution of said welding step; a step of determining whether a welding state of the first and second work elements is proper or not by analyzing a generation state of the molten pool based on the image picked up in said picking-up step; and a step of adjusting at least one of a parameter of the irradiated laser beam, a relative speed between the irradiated laser beam and the fed filler wire and the work elements, and a feeding speed of the filler wire so that the welding state of the first and second work elements becomes proper in case the welding state determined in said determining step is not proper.

According to a preferred embodiment of the present invention, there is provided a laser welding method of a pair of flat-plate-shaped metal plates overlapped vertically with a clearance therebetween, comprising a step of welding upper and lower metal plates overlapped with laser beams and a filler wire, in which the laser beams is irradiated toward a surface of the upper metal plate so as to move along a welding path and the filler wire is fed to a laser-beam irradiated portion of the upper metal plate such that a tip thereof follows the laser beams irradiated in such a manner that the laser-beam irradiated portion of the upper metal plate is molten such that a molten hole which penetrates the upper metal plate vertically is generated and the tip of the filler wire is molten, so that a molten pool in which molten metal of the upper metal plate and the filler wire is collected around the molten hole can be generated behind the laser-beam irradiated portion in such a manner that the molten metal of the upper metal plate and the filler wire lowers beyond the clearance between the upper and lower metal plates, a step of picking up an image of the molten pool near the molten hole from the side of the upper metal plate during an execution of the welding step, a step of determining whether a welding state of the upper and lower metal plates is proper or not by analyzing a generation state of the molten pool based on the image picked up in the picking-up step, and a step of adjusting at least one of a parameter of the irradiated laser beams, a relative speed between the irradiated laser beams and the fed filler wire and the metal plates, and a feeding speed of the filler wire so that the welding state of the upper and lower metal plates becomes proper in case the welding state determined in the determining step is not proper.

According to the above, since the above-described adjusting step is provided, the welding of the metal plates can be made proper. Further, since the welding state (being proper or improper) of the metal plates is determined by analyzing the generation state of the molten pool based on the picked-up image of the molten pool near the molten hole, the determination can be made accurate. Thus, the proper and high-quality welding can be provided. Herein, in case the above-described image picking-up and determination are repeated in a considerably short cycle, the above-described adjustment can be conducted promptly to correct the improper welding state, thereby improving the welding state. In other words, there is provided a laser welding method which can provide the proper welding of the flat-plate-shaped metal plates overlapped vertically with the clearance therebetween, without detecting the feeding load of the filler wire.

According to an embodiment of the present invention, it is determined in said determining step that the welding state of the first and second work elements is not proper in case the width of the molten pool which is detected based on the image picked up in said picking-up step is not within a range of twice through five times the diameter of the laser beam irradiated on the surface of the first work element.

According to an embodiment of the present invention, it is determined in the determining step that the welding state of the upper and lower metal plates is not proper in case the width of the molten pool which is detected based on the image picked up in the picking-up step is not within a range of twice through fifth times the diameter of the laser beams irradiated on the surface of the upper metal plate. According to the experiments conducted by the inventors of the present invention, it was found that in case the width of the molten pool was less than twice the diameter of the laser beams or greater than fifth times the diameter of the laser beams, the molten metal of the upper metal plate did not lower to (reach) the lower metal plate, so that the proper welding of the upper and lower metal plates could not be provided. Therefore, the above-described adjustment is conducted in case the width of the molten pool is not within the range of twice through fifth times the diameter of the laser beams. Thereby, the welding state can be improved.

According to another embodiment of the present invention, it is determined in said determining step that the welding state of the first and second work elements is not proper in case a ratio which is obtained by dividing the amount of projection of the molten metal in the molten pool over the surface of the first work element by the width of the molten pool is greater than 0.2, the amount of projection of the molten metal in the molten pool and the width of the molten pool being detected based on the image picked up in said picking-up step.

According to another embodiment of the present invention, in case it is determined that a ratio which obtained by dividing the amount of projection of the molten metal in the molten pool over the surface of the first work element by the width of the molten pool is -0.1 or less, in the adjusting step a laser output is increased and/or the feeding speed of the filler wire is increased.

According to another embodiment of the present invention, it is determined in the determining step that the welding state of the upper and lower metal plates is not proper in case a ratio which is obtained by dividing the amount of projection of the molten metal in the molten pool over the surface of the upper metal plate by the width of the molten pool is greater than 0.2, the amount of projection of the molten metal in the molten pool and the width of the molten pool being detected based on the image picked up in the picking-up step. The experiments conducted by the inventors of the present invention also showed that in case the ratio obtained by dividing the amount of projection of the molten metal by the width of the molten pool was greater than 0.2, the molten metal of the upper metal plate did not lower to the lower metal plate, so that the proper welding of the upper and lower metal plates could not be provided. Therefore, the above-described adjustment is conducted in case the ratio obtained by dividing the amount of projection of the molten metal by the width of the molten pool was greater than 0.2. Thereby, the welding state can be improved.

According to another embodiment of the present invention, in the adjusting step, the at least one of a parameter of the irradiated laser beam, a relative speed between the irradiated laser beam and the fed filler wire and the work elements, and a feeding speed of the filler wire is adjusted so that the ratio of the width of a welding bead of the second work element at the surface thereof facing the first work element to the width of a welding bead of the first work element at the surface thereof on the irradiating side with the laser beam is not smaller than about 0,75.

According to another embodiment of the present invention, the image picking step, the determining step and the adjusting step are executed repeatedly in the specified cycle which is smaller than about 1s, preferably smaller than about 0,5s, most preferably smaller than about 100ms.

According to another aspect of the present invention, there is provided a computer program product, particularly embodied on a computer-readable storage medium or as a signal or data stream, comprising computer-readable instructions which, when loaded and executed on a suitably system, control the execution of a laser welding method according to the invention or a preferred embodiment thereof.

According to another aspect of the present invention, there is provided a laser welding apparatus of a pair of work elements at least partly overlapped with a clearance therebetween, comprising: means for welding an overlapped portion of first and second work elements with one or more laser beam and a filler wire, in which the laser beam is irradiated toward a surface of the first work element so as to move along a welding path and the filler wire is fed to a laser-beam irradiated portion of the first work element such that a tip thereof follows the laser beam irradiated in such a manner that the laser-beam irradiated portion of the first work element is molten such that a molten hole which penetrates the first work element is generated and the tip of the filler wire is molten, so that a molten pool in which molten metal of the first work element and the filler wire is collected around the molten hole can be generated behind the laser-beam irradiated portion in such a manner that the molten metal of the first work element and the filler wire flows across the clearance between the upper and lower metal plates; means for picking up an image of the molten pool near the molten hole from the side of the first work element during a welding execution by said welding means; means for determining whether a welding state of the first and second work elements is proper or not by analyzing a generation state of the molten pool based on the image picked up by said picking-up means; and means for adjusting at least one of a parameter of the irradiated laser beam, a relative speed between the irradiated laser beam and the fed filler wire and the work elements, and a feeding speed of the filler wire so that the welding state of the first and second work elements becomes proper in case the welding state determined by said determining means is not proper.

According to a preferred embodiment of another aspect of the present invention, there is provided a laser welding apparatus of a pair of flat-plate-shaped metal plates overlapped vertically with a clearance therebetween, comprising means for welding upper and lower metal plates overlapped with laser beams and a filler wire, in which the laser beams is irradiated toward a surface of the upper metal plate so as to move along a welding path and the filler wire is fed to a laser-beam irradiated portion of the upper metal plate such that a tip thereof follows the laser beams irradiated in such a manner that the laser-beam irradiated portion of the upper metal plate is molten such that a molten hole which penetrates the upper metal plate vertically is generated and the tip of the filler wire is molten, so that a molten pool in which molten metal of the upper metal plate and the filler wire is collected around the molten hole can be generated behind the laser-beam irradiated portion in such a manner that the molten metal of the upper metal plate and the filler wire lowers beyond the clearance between the upper and lower metal plates, means for picking up an image of the molten pool near the molten hole from the side of the upper metal plate during a welding execution by the welding means, means for determining whether a welding state of the upper and lower metal plates is proper or not by analyzing a generation state of the molten pool based on the image picked up by the picking-up means, and means for adjusting at least one of a parameter of the irradiated laser beams, a relative speed between the irradiated laser beams and the fed filler wire and the metal plates, and a feeding speed of the filler wire so that the welding state of the upper and lower metal plates becomes proper in case the welding state determined by the determining means is not proper.

According to an embodiment of the present invention, the determining means determine the welding state of the first and second work elements as not being proper in case the width of the molten pool which is detected based on the image picked up by the picking up means is not within a range of twice through five times the diameter of the laser beam irradiated on the surface of the first work element.

According to another embodiment of the present invention, the determining means determine the welding state of the first and second work elements as not being proper in case a ratio which is obtained by dividing the amount of projection of the molten metal in the molten pool over the surface of the first work element by the width of the molten pool is greater than 0.2, the amount of projection of the molten metal in the molten pool and the width of the molten pool being detected based on the image picked up by the picking up means.

According to another embodiment of the present invention, in case the determining means determine that a ratio which obtained by dividing the amount of projection of the molten metal in the molten pool over the surface of the first work element by the width of the molten pool is -0.1 or less, in the adjusting step a laser output is increased and/or the feeding speed of the filler wire is increased.

According to another embodiment of the present invention, the adjusting means adjust the at least one of a parameter of the irradiated laser beam, a relative speed between the irradiated laser beam and the fed filler wire and the work elements, and a feeding speed of the filler wire so that the ratio of the width of a welding bead of the second work element at the surface thereof facing the first work element to the width of a welding bead of the first work element at the surface thereof on the irradiating side with the laser beam is not smaller than about 0,75.

According to another embodiment of the present invention, the means are configured such that the control process is executed repeatedly in the specified cycle which is smaller than about 1s, preferably smaller than about 0,5s, most preferably smaller than about 100ms.

The above-described laser welding apparatus according to another aspect of the present invention can provide substantially the same operations and advantages as those of the above-described laser welding method.

Other features, aspects, and advantages of the present invention will become apparent from the following description which refers to the accompanying drawings. It should be understood that even though embodiments are separately described, single features thereof may be combined to additional embodiments.

FIG. **1** is a perspective view of a laser welding apparatus according to a first embodiment of the present invention.

FIG. **2** is a control constitution diagram of the laser welding apparatus.

FIG. **3** is a photograph showing a section of a welding portion in a proper welding state.

FIG. **4** is an exemplified image of a laser-beam irradiated portion of a metal plate and its vicinity which is picked up by an image picking-up device during a laser welding.

FIG. **5** is a perspective view showing a state of the laser-beam irradiated portion of the metal plate and its vicinity during the laser welding.

FIG. **6A** is a plan view showing the state of the laser-beam irradiated portion of the metal plate and its vicinity during the laser welding, and FIG. **6B** is a sectional view taken along line A-A of FIG. **6A****.**

FIG. **7A** is a sectional view taken along line **B-B** of FIG. **6B****,** FIG. **7B** is a sectional view taken along line C-C of FIG. **6B****,** FIG. **7C** is a sectional view taken along line D-D of FIG. **6B****,** FIG. **7D** is a sectional view taken along line E-E of FIG. **6B****,** FIG. **7E** is a sectional view taken along line F-F of FIG. **6B****,** and FIG. **7F** is a sectional view taken along line G-G of FIG. **6B****.**

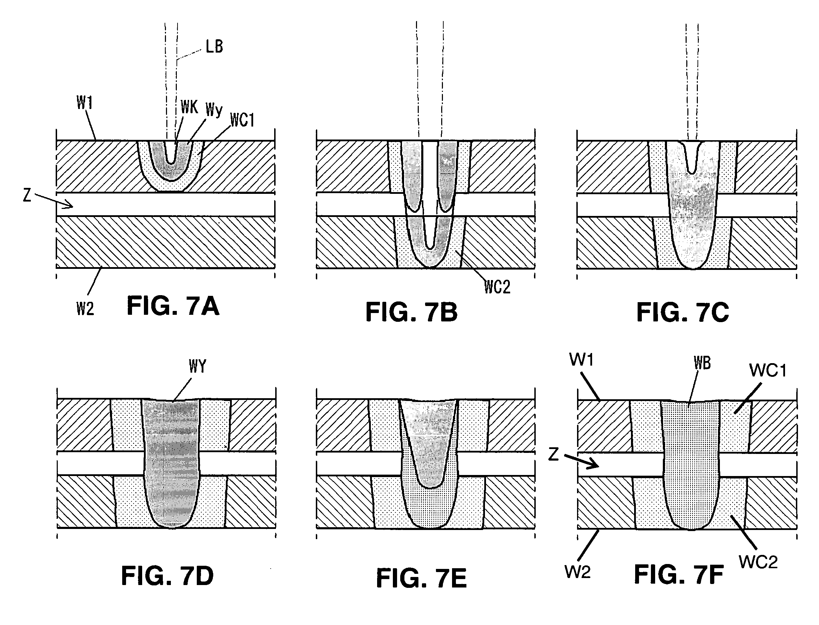

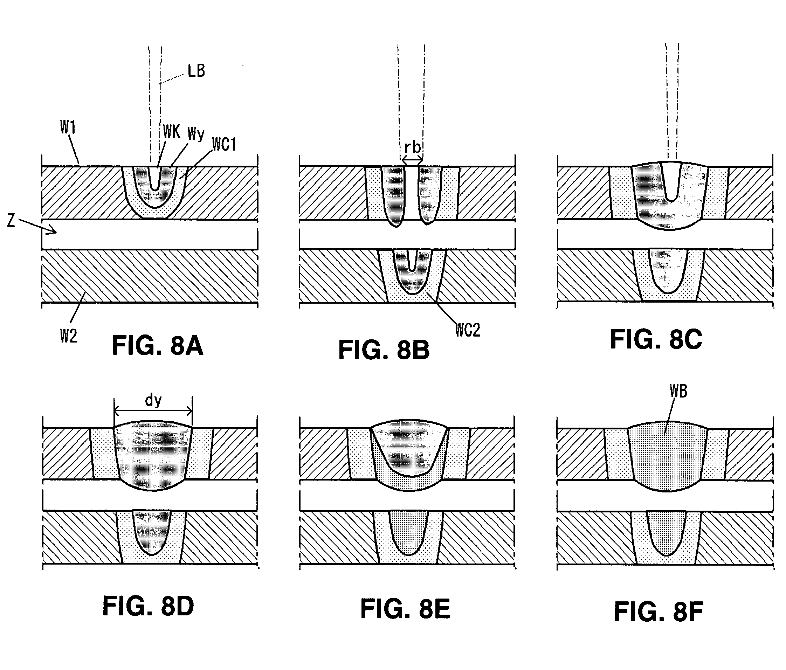

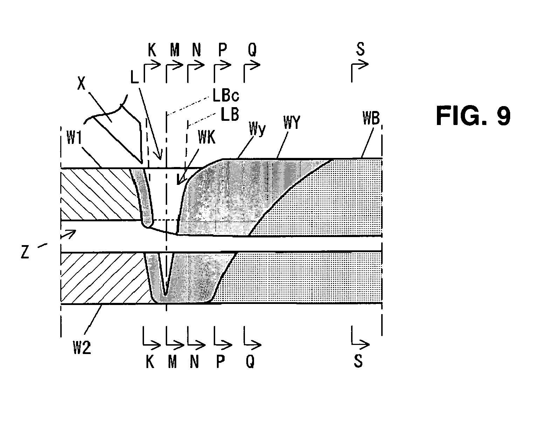

FIGS. **8A-F** are sectional views in case the welding state is not proper (the width of a molten pool is great), which correspond to FIGS. **7A-7F****;** specifically, FIG. **8A** is a sectional view taken along line K-K of FIG. **9****,** FIG. **8B** is a sectional view taken along line M-M of FIG. **9****,** FIG. **8C** is a sectional view taken along line N-N of FIG. **9****,** FIG. **8D** is a sectional view taken along line P-P of FIG. **9****,** FIG. **8E** is a sectional view taken along line Q-Q of FIG. **9****,** and FIG. **8F** is a sectional view taken along line S-S of FIG. **9****.**

FIG. **9** is a sectional view in case the welding state is not proper (the width of the molten pool is great), which corresponds to FIG. **6B****.**

FIGS. **10A-F** are sectional views in case the welding state is not proper (the width of the molten pool is small), which correspond to FIGS. **8A-7F****.**

FIG. **11** is a flowchart showing a welding control by a controller.

FIG. **12** is a photograph in case the welding state is not proper (the width of the molten pool is great), which corresponds to FIG. **4****.**

FIGS. **13A****, B** are sectional views explaining an operation of the control in case the width of the molten pool is great.

FIG. **14** is a photograph in case the welding state is not proper (the width of the molten pool is small), which corresponds to FIG. **4****.**

FIG. **15** is a flowchart showing another welding control by the controller according to second and third embodiments.

FIG. **16** is an explanatory diagram of a detection of the amount of projection of the molten pool.

FIG. **17** is a flowchart showing further another welding control by the controller according to a fourth embodiment.

Hereinafter, a laser welding method, computer program product for its control and a laser welding apparatus according to preferred embodiments of the present invention will be described.

### EMBODIMENT 1

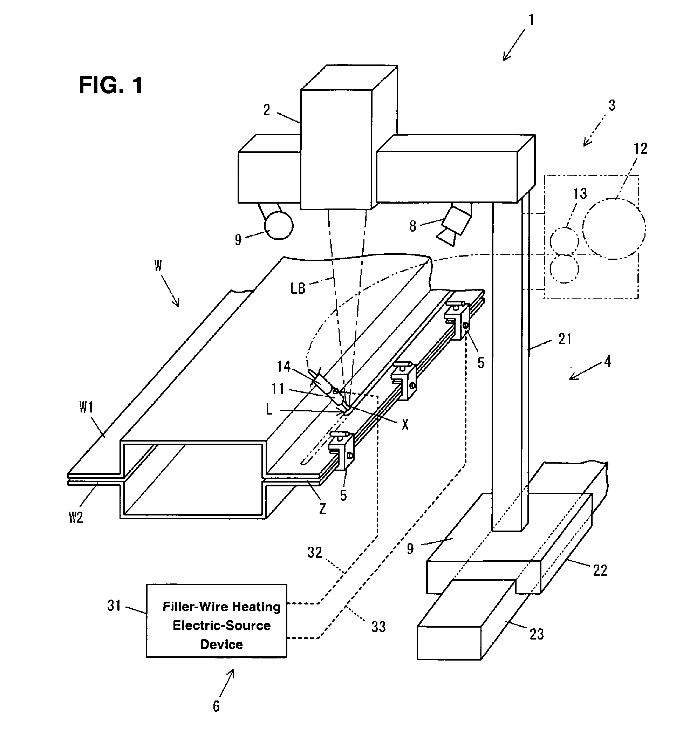

FIG. **1** is a perspective view of a laser welding apparatus **1** according to the present embodiment. The laser welding apparatus **1** comprises a laser head **2** which generates one or more laser beams **LB,** a filler-wire feeding device **3** which feeds at least one filler wire **X** towards or to a laser-beam irradiated portion **L** from the laser head **2,** and a moving device **4** which supports the laser head **2** and the filler-wire feeding device **3** and moves them relatively to work or work piece **W.** Herein, the work **W** is exemplarily comprised of upper and lower metal plates **W1, W2** (as preferred first and second work elements) which particularly have a U-shaped cross section, respectively, and parts (e.g. flanges) of which are at least partly overlapped, for example. The flanges of the metal plates **W1, W2** are clamped or positioned with plural clamps **5...5,** however, some clearance **Z** may be inevitably generated between facing or adjacent faces of these metal plates **W1, W2** due to their manufacturing accuracy.

The laser head **2** is constituted by using or comprises a high-power laser, such as YAG laser or carbonic-acid gas laser, and its laser power is configured to be variable. While the focus point of the laser beams preferably is variable, it is set on or close to the surface of the upper metal plate **W1** in the present embodiment.

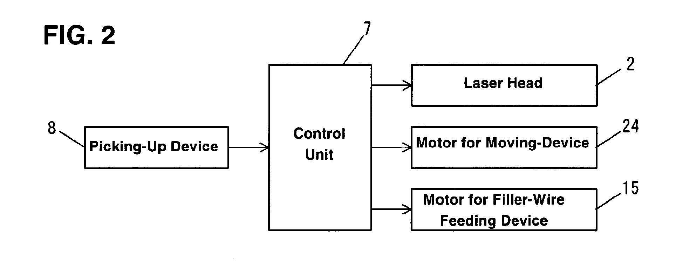

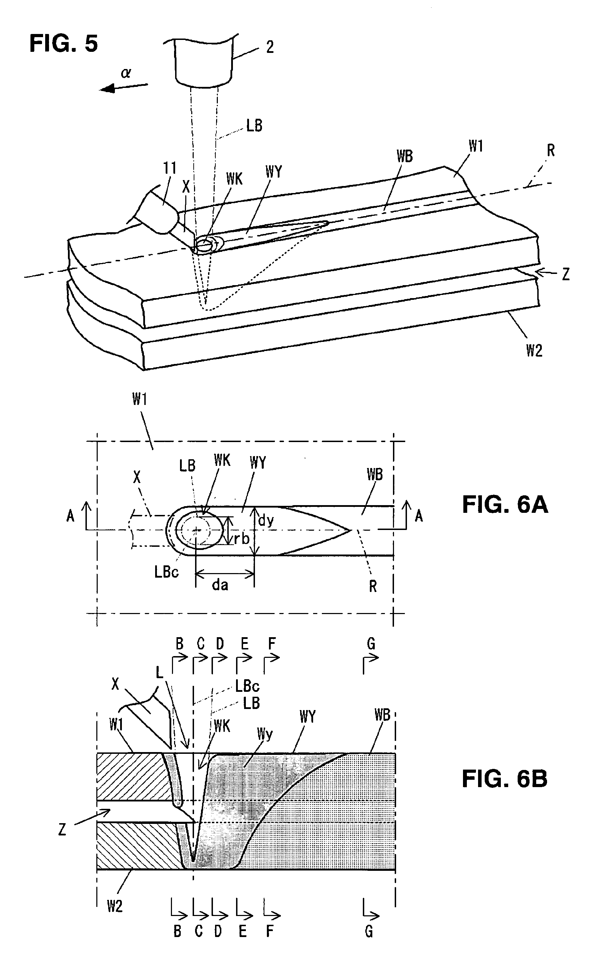

The filler-wire feeding device **3** particularly comprises a wire-feeding nozzle **11** (see FIG. **5**) which preferably is arranged in such a manner that its tip is positioned near a front portion of the laser-beam irradiated portion **L** of the laser beams **LB,** a wire roll **12** by which the filler wire **X** is wound up, a providing roller **13** which is driven by a motor **15** (see FIG. **2**) and provides the filler wire **X** from the wire roll **12,** and/or a tube 14 which extends substantially between the providing roller **13** and the wire-feeding nozzle **11** and guides the filler wire **X** from the providing roller **13** to the wire-feeding nozzle **11.** The motor **15** particularly is constituted by a servo motor having its variable rotational speed, so that the feeding amount of the wire **X** to the laser-beam irradiated portion is configured to be adjustable.

The moving device **4** comprises a support member **21** to which the laser head **2** and the filler-wire feeding device **3** are attached or mounted, a stand member **22** which is attached to a lower end of the support member **21,** a rail member **23** which is disposed e.g. on a floor in a factory or the like and supports the stand member movably, and a moving mechanism (not illustrated) which moves the stand member **12** substantially along the rail member **23.** This moving mechanism may be constituted by any known mechanism, so its detailed description will be omitted here. However, its drive source may be made of a servo motor **24** (see FIG. **2**) having its rotational speed controllable, so that the moving speed of the laser head **11** and the filler-wire feeding device **3** relative to the work **W** may be adjustable.

The laser welding apparatus **1** preferably further comprises a filler-wire heating device **6** which heats the filler wire **X.** This filler-wire heating device **6,** which heats the filler wire **X** particularly by means of heat generated by applying an electric current to the filler wire **X,** preferably comprises a heating electric-source device **31,** a nozzle connecting cable **32** which connects the heating electric-source device **31** and the wire feeding nozzle **11,** and/or a clamp connecting cable **33** which connects the heating electric-source device **31** and one of the plural clamps **5...5.** The electric current from the heating electric-source device **31** is configured to return to the heading electric-source device **31** by way of the nozzle connecting cable **32,** the nozzle **11,** the filler wire **X,** the metal plates **W1, W2,** the clamp **5**, the clamp connecting cable **33.** Herein, the flowing direction of the electric current may be set to be opposite to the above.

Further, as shown in FIG. **2****,** the laser welding apparatus **1** according to the present embodiment comprises a control unit **7** which executes the welding control and an image picking-up device **8** which is fixed to the support member **21** of the moving device **4** and picks up an image of at least a part of a laser-beam irradiated portion L of the work **W** and its vicinity from substantially above.

The image picking-up device **8** may be comprised of a CCD camera which picks up an image in a specified (predetermined or predeterminable) cycle, for example, and the image picked up (or a signal representative of the above) is outputted to the control unit **7** preferably regularly or at each time. Herein, an illuminating device such as a lamp **9** which at least partly illuminates the laser-beam irradiated portion **L** of the upper metal plate **W1** and its vicinity is provided at the support member **21** of the moving device **4**. This lamp **9** is arranged on the substantially opposite side to the image picking-up device **8** relative to a welding path **R** to illuminate the laser-beam irradiated portion **L** of the upper metal plate **W1** and its vicinity from above obliquely. The xenon lamp may be used as the lamp **9**.

The control unit **7** analyses the image inputted (e.g. at each time) and based on this analysis result outputs an output control signal to the laser head **2**, a rotational-speed control signal to the motor **24** of the moving device **4**, and/or a rotational-speed control signal to the motor **15** of the filler-wire feeding device **10,** respectively.

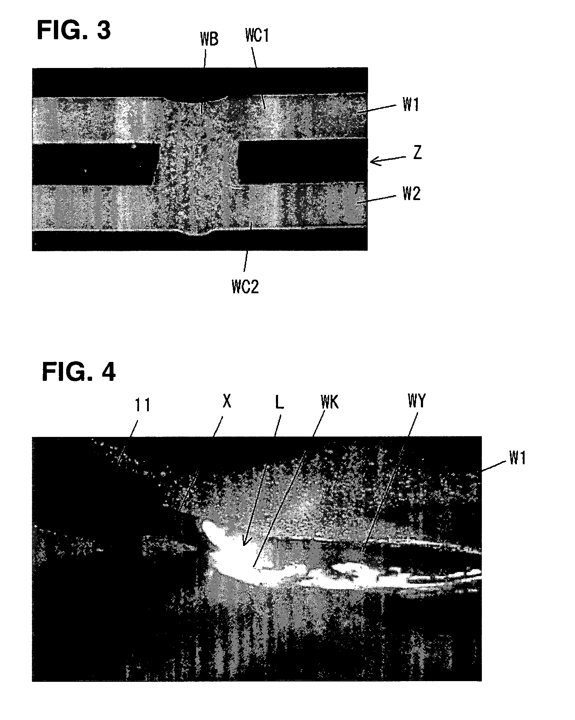

FIG. **3** is a photograph (one example) showing a section of the work in a state in which a proper welding strength is obtained in case the two metal plates **W1, W2** with the clearance **Z** therebetween are welded by feeding the filler wire **X.** As apparent from this photograph, these metal plates **W1, W2** are connected via a bead or bead portion **WB** which is formed of a molten metal **Wy** which has solidified. Further, on the right and left sides of the bead **WB** exist heat-influence portions **WC1, WC2** where some change in the metal structure occurs at the upper and lower metal plates **W1, W2** (e.g. a whitish color-changed portion on the both sides of the bead **WB** in FIG. **3**). Herein, FIG. **3** shows an example in which the thickness of the metal plates **W1, W2** is 1.6mm, the clearance **Z** is 1.3mm, the laser output is 6kw, the diameter of laser beams is 0.6mm, the diameter of the filler wire **X** is 0.9mm, the feeding speed of the filler wire **X** is 9.5m/min, and the welding speed is 1.5m.

The inventors of the present invention obtained the visible image (animation) shown in FIG. **4** which shows the laser-beam irradiated portion **L** of the work **W** shown in FIG. **1** and its vicinity which was picked up by the image picking-up device **8** during the laser welding, and then analyzed the obtained images. According to this analysis, the welding of the upper and lower metal plates **W1, W2** is considered to be conducted as shown in FIGS. **5-7****.**

At first, briefly explaining referring to FIG. **5**, the one or more laser beams **LB** are irradiated toward the surface (upper face) of the upper metal plate **W1** (as the preferred first work element) of the at least partly overlapped metal plates **W1, W2** with the clearance **Z** therebetween so as to move substantially along the welding path **R** with moving the laser head **2** as shown by an arrow **á** and the filler wire **X** is fed to the laser-beam irradiated portion **L** of the upper metal plate **W1** such that its tip follows the laser beams irradiated in such a manner that the laser-beam irradiated portion **L** of the upper metal plate **W1** substantially is molten such that the molten hole **WK** which penetrates the upper metal plate **W1** vertically is generated and the tip of the filler wire **X** is molten, so that the molten pool **WY** in which the molten metal of the upper metal plate **W1** and the filler wire **X** is collected substantially around the molten hole **WK** can be generated substantially behind or adjacent to the welding path **R** in such a manner that the molten metal lowers beyond the clearance **Z** between the upper and lower metal plates **W1, W2** (as the preferred first and second work elements). Thereby, the upper and lower metal plates **W1, W2** are welded together, and the bead **WB** which is formed of the molten metal which has solidified is formed substantially behind or adjacent to the molten pool **WY.**

Specifically speaking, as shown in FIGS. **6A****, B** and **7A,** the metal of the upper metal plate **W1** (as the preferred first work element) near the center **LBc** of the one or more laser beams **LB** on the welding path **R** is molten so that the molten metal **Wy** is generated. Meanwhile, at the periphery of the molten metal **Wy** exists the heat-influence portion **WC1** where some change in the metal structure occurs. Herein, **WK** particularly denotes the molten hole or part (keyhole), which is formed by the molten metal **Wy** which has been pushed away toward its periphery with receipt of the pressure of the molten metal in a plasma state by the laser beams **LB.** Its front portion appears in the figures.

As shown in FIGS. **6A****, B** and **7B,** the molten hole **WK** penetrates the upper metal plate **W1** and reaches the lower metal plate **W2** (as the preferred second work element) at the laser-beam center **LBc** on the welding path **R.** Further, the metal of the lower metal plate **W2** near the laser-beam center **LBc** is or may be also molten so that the molten metal **Wy** is generated. The molten metal **Wy** of the upper metal plate **W1** lowers or passes or bridges to the side of the lower metal plate **W2.** At the periphery of the molten metal **Wy** of the lower metal plate **W2** exists the heat-influence portion **WC2.**

As shown in FIGS. **6A****, B** and **7C,** the molten metal **Wy** of the upper metal plate **W1** near a portion behind the laser-beam center **LBc** on the welding path **R** lowers further downward (or passes further to the lower metal plate **W2** as the preferred second work element), and the upper and lower metal plates **W1, W2** are welded or connected together. Herein, this welding portion will be the front portion of the molten pool **WY** as well.

As shown in FIGS. **6B** and **7D****,** the molten pool **WY** in which the molten metal **Wy** substantially is collected in the previously-formed molten hole is generated at a portion behind the laser-beam center **LBc** on the welding path **R.**

As shown in FIGS. **6B** and **7E****,** the molten metal **Wy** in the molten pool **WY** starts solidifying from below (or from a side substantially opposite to the irradiation side with the laser beam(s) **LB**) particularly at a portion further behind the laser-beam center **LBc** on the welding path **R.** At a further rearward portion, the molten metal in a whole area of the molten pool **WY** has solidified as shown in FIG. **7F****.**

Meanwhile, according to the experiments conducted by the inventors, there was a case in which the upper and lower metal plates **W1, W2** were not properly welded together via the bead as shown in FIG. **8F** even in case the filler wire **X** was not fed to the laser-beam irradiated portion L during the welding.

In case of FIG. **8F****,** compared with the case of FIG. **7F****,** the clearance **Z** between the metal plates **W1, W2** is greater, and the width of the bead **WB** of the upper metal plate **W1** is considerably greater than that of the bead **WB** of the lower metal plate **W2,** particularly the ratio of the width of the bead **WB** of the lower metal plate **W2** at the surface thereof facing the upper metal plate **W1** to the width of the bead **WB** of the upper metal plate **W1** at the surface thereof on the irradiating side with the laser beam **LB** is smaller than about 0,75 in the final state of the welding, as depicted in FIG. **8F.** FIGS. **8A-E** and **9** show the same sectional positions as FIGS. **7A-E** and **6A, B****,** predicting the mechanism of becoming the state of FIG. **8F****.** Here, there is no substantial difference in the state of the molten metal **Wy** at the sectional positions shown in FIG. **8A****, B,** even compared with FIG. **6A****, B.** However, there are some differences in that at the sectional position **C** and the others. Herein, the surface tension acts on the molten metal **Wy.** Accordingly, even if the molten metal **Wy** of the upper metal plate **W1** lowers or flows or expands to a certain degree which is almost the same as the case of FIG. **6A****, B,** it may not reach (contact) the lower metal plate **W2** because the clearance **Z** between the metal plates **W1, W2.** Consequently, the heat of the molten metal **Wy** is necessarily transmitted in the width direction of the upper metal plate **W1,** so that it may be predicted that the width of the molten pool **ZY** (molten metal **Wy**) expands and the width of the bead **WB** of the upper metal plate **W1** is considerably wider than that of the bead **WB** of the lower metal plate **W2** of FIG. **7F****.** Accordingly, it is preferred that the laser beam **LB,** a relative speed between the irradiated laser beam **LB** and the fed filler wire **X** and the metal plates **W1, W2** and/or the feeding speed of the filler wire **X** are set or controlled such that the ratio of the width of the bead **WB** of the lower metal plate **W2** at the surface thereof facing the upper metal plate **W1** to the width of the bead **WB** of the upper metal plate **W1** at the surface thereof on the irradiating side with the laser beam **LB** is not smaller than about 0,75 in the final state of the welding.

Herein, the width **dy** of the molten pool **WY** particularly is about five times the diameter **rb** of the laser beams or greater at the sectional position **D.** Accordingly, it is preferred that the width **dy** of the molten pool **WY** is less than about five times the diameter **rb** of the laser beam(s) **LB,** as the inventors have realized that in case the width **dy** of the molten pool **WY** is about five times the diameter **rb** of the laser beams or greater, the both metal plates **W1, W2** may not be properly welded via the bead **WB** as shown in FIG. **8F** on the contrary.

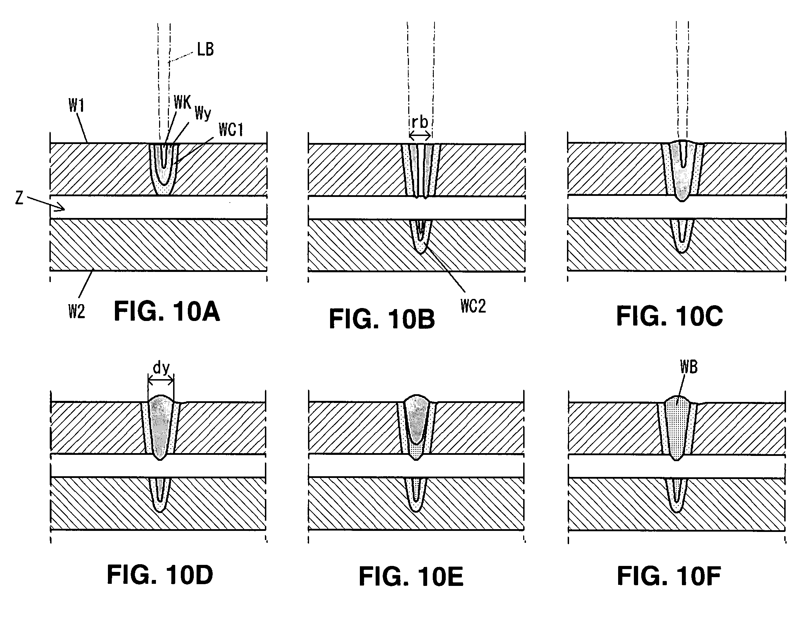

Moreover, according to the experiments conducted by the inventors, there was a case in which the upper and lower metal plates **W1, W2** were not welded together as shown in FIG. **10F****.** In this case, the clearance **Z** between the metal plates **W1, W2** is not different from the case of FIG. **6F** very much, however, the width of the bead **WB** of the upper metal plate **W1** and the lower metal plate **W2** become less. FIGS. **10A-E** show the same sectional positions as FIGS. **6A-E****,** predicting the mechanism of becoming the state of FIG. **10F****.** As apparent from FIGS. **10A-F****,** in the case of FIG. **10F****,** the width of the molten metal **Wy** of the upper and lower metal plates **W1, W2** has already become small at the sectional positions **A, B.** The reason for this may be that the energy of the laser beam **LB** was consumed too much for the melting of the filler wire **X** so that the heat value to the metal plates **W1, W2** become short. Thus, it may be considered that the width **dy** of the molten pool **WY** does not expand sufficiently even at the sectional positions **C, D** and the molten metal Wy does not lower very much, either.

In case of this welding state, the width **dy** of the molten pool **WY** is less than twice the laser-beam diameter **rb** at the sectional position of FIG. **10D****.** That is, in case the width **dy** of the molten pool **WY** is less than twice the laser-beam diameter **rb,** it may be considered that the both metal plates **W1, W2** are not welded via the bead **WB.** Accordingly, the inventors have uncovered that it is preferred that the width **dy** of the molten pool **WY** is not less than twice the laser-beam diameter **rb.**

Accordingly, in the present embodiment, the image of at least part of the molten pool **WY** just behind the molten hole **WK** is picked up or detected by the picking-up device **8** from the position substantially above the upper metal plate **W1,** the picked-up image data is analyzed by the control unit **7** to obtain the state of generation (the width **dy** and so on) of the molten pool **WY,** it is determined based on this obtained generation state whether the welding state of the metal plates **W1, W2** is proper or not, and the welding conditions are adjusted based on the determination result.

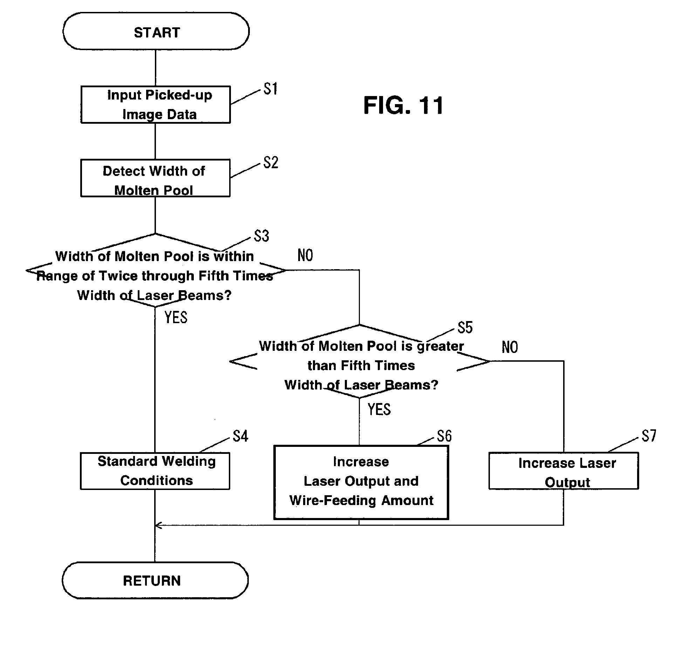

FIG. **11** is an examplary flowchart of the control executed by the control unit **7**. The control of this flowchart is executed repeatedly in the specified cycle which may be preferably smaller than about 1s, more preferably smaller than about 0,5s, most preferably smaller than about 100ms. For example, an extremely short cycle of about 10ms may be set.

At first, the updated image data from the image picking-up device **8** is inputted in step **S1.**

In the next step **S2,** the inputted image data is analyzed, and the width **dy** of the molten pool **WY** at the position which is located the specified distance **da** (see FIG. **6A**) behind the laser-beam center **LBc** on the welding path **R** is detected or determined. Herein, the specified (predetermined or predeterminable) distance **da** is set to be so close to the laser-beam center **LBc** and the molten hole **WK** that the molten hole **WK** can surely exist despite a slight change in its length. For example, it substantially is set to be within the range of twice through five times the diameter **rb** (at the surface position of he upper metal plate) of the laser beams **LB.**

The detection of the molten pool **WY** of the metal plate **W1** may be conducted based on the difference in color or brightness between the surface of the upper metal plate **W1** and the molten pool **WY,** for example. Further, since the temperature of the molten pool **WY** is considerably higher than that of the other portion, the molten pool **WY** may be detected by detecting the temperature distribution on the surface of the upper metal plate **W1** which is obtained from the image data of the infrared area and then by selecting the high-temperature area which is higher than the melting temperature based on this temperature distribution.

Next, it is determined in step **S3** whether or not the width **dy** of the molten pool **WY** detected in the step **S2** is substantially within the range of twice through five times the laser-beam diameter **rb.** When the width **dy** of the molten pool **WY** substantially is within this range (YES), the standard welding conditions are maintained. Meanwhile, when it substantially is not within the above-described range (NO), the control sequence proceeds to step **S5.**

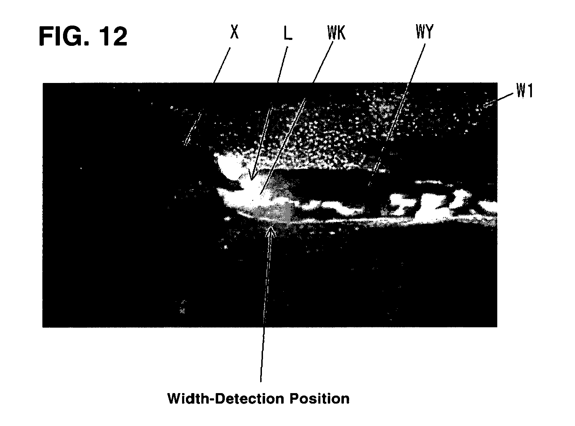

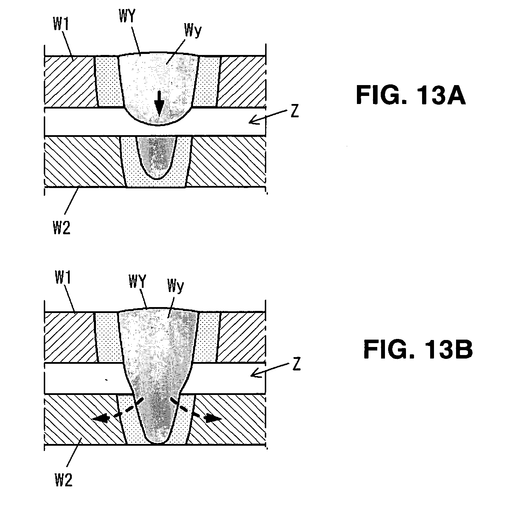

It is determined in step **S5** whether the width **dy** of the molten pool **WY** is greater than fifth times the laser-beam diameter **rb** or not. When it is greater than five times the laser-beam diameter **rb** (YES), the laser output is increased and the feeding amount of the filler wire **X** per unit time is increased as well in step **S6.** According to the recognition of the inventors, in case the width **dy** of the molten pool **WY** is greater than five times the laser-beam diameter **rb** (one example is shown in FIG. **12**), the molten metal **Wy** of the molten pool **WY** does not lower to the lower metal plate **W2** because of the surface tension as shown in FIG. **8D****.** Therefore, the laser output is increased and the feeding amount of the filler wire **X** per unit time is increased. Thereby, as shown in FIG. **13A** (corresponding to the sectional position of FIG. **8D**), the amount of the molten metal **Wy** increases and the molten metal **Wy** lowers easily or flows or expands easily to the second metal plate **W2.** Further, as shown in FIG. **13B** (corresponding to the sectional position of FIG. **8D**), the molten metal **Wy** lowers to the lower metal plate **W2** beyond the clearance **Z** of the metal plates **W1, W2,** so that it can reach (contact) the molten metal **Wy** of the lower metal plate **W2.** Thereby, the temperature or heat of the molten metal **Wy** transmits to the lower metal plate **W2** in the width direction, so that the width of the molten pool **WY** of the upper metal plate **W1** can be made proper (shrink).

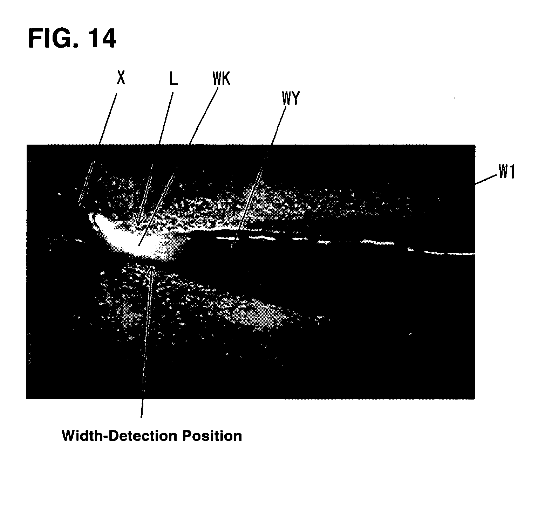

Meanwhile, when it is determined in the step **S5** that the width **dy** of the molten pool WY is not greater than five times the laser-beam diameter **rb** (NO), that is, when the width **dy** of the molten pool **WY** is less than twice the laser-beam diameter **rb,** the laser output is increased in step **S6.** According to the recognition of the inventors, in case the width **dy** of the molten pool **WY** is less than twice the laser-beam diameter **rb** (one example is shown in FIG. **14**), the melting of the upper metal plate **W1** is not sufficient because the laser output is consumed too much for melting the filler wire **X,** so that the metal plates **W1, W2** cannot be welded together via the bead **WB.** Therefore, the laser output is increased. Thereby, the melting of the upper metal plate **W1** is promoted and the amount of the molten metal **Wy** increases. Consequently, the width **dy** of the molten metal **WY** expands more than the its state shown in FIG. **10D** and lowers or flows or expands downward further. Accordingly, its state proceeds to the one shown in FIG. **7D****.**

As described above, according to the laser welding apparatus **1** of the present embodiment, the laser beams **LB** is irradiated toward the surface of the upper metal plate **W1** of the metal plates **W1, W2** at least partly overlapped vertically with the clearance **Z** therebeteen so as to move along the welding path **R** and the filler wire **X** is fed to the laser-beam irradiated portion **L** of the upper metal plate **W1** such that its tip substantially follows the irradiated laser beams **LB** in such a manner that the laser-beam irradiated portion **L** of the upper metal plate **W1** is molten such that the molten hole **WK** which penetrates the upper metal plate **W1** vertically is generated and the tip of the filler wire **X** is molten. Consequently, the molten pool **WY** in which the molten metal of the upper metal plate **W1** and the filler wire **X** is collected around the molten hole **WY** can be generated behind the laser-beam irradiated portion **L** in such a manner that the molten metal **Wy** of the upper metal plate **W1** and the filler wire **X** lowers beyond the clearance **Z** between the upper and lower metal plates **W1, W2.**

Herein, the image of the molten pool **WY** near the molten hole **WK** from the side of the upper metal plate **W1** during the execution of the welding is picked up or detected, it is determined whether the welding state of the upper and lower metal plates **W1, W2** (as the preferred first and second work elements) is proper or not by analyzing the generation state of the molten pool **WY** based on the image picked up, and at least one of the parameter of the irradiated laser beams **LB** and the relative speed between the irradiated laser beams **LB** and the fed filler wire **X** and the metal plates **W1, W2** is adjusted or controlled so that the welding state of the upper and lower metal plates **W1, W2** becomes proper in case the welding state determined is not proper. In particular, since the generation state of the molten pool **WY** can be detected accurately based on the image picked up and it is determined based on this detected state whether the welding state of the upper and lower metal plates **W1, W2** is proper or not according to the above, the accurate and reliable determination can be executed. Thus, the proper and high-quality welding can be provided. Herein, in case the above-described image picking-up and determination are repeated in a considerably short cycle, the above-described adjustment can be conducted promptly to correct the improper welding state, thereby improving the welding state.

Further, the width **dy** of the molten pool **WY** near the molten hole **WK** may be detected based on the above-described picked-up image data, and it is determined that the welding state is not proper in case this width **dy** is not substantially within the range of twice through five times the laser-beam diameter **rb.** According to the experiments conducted by the inventors, it was found that in case the width **dy** of the molten pool **WY** was less than twice the diameter of the laser beams or greater than fifth times the diameter of the laser beams, the molten metal **Wy** of the upper metal plate **W1** did not lower to the lower metal plate, so that the proper welding of the upper and lower metal plates **W1, W2** could not be provided. According to the present embodiment, however, the above-described adjustment is conducted in this case, so that the welding state can be improved.

Moreover, while the check of the welding portion of the welded work was conventionally conducted by cutting the work or putting a cold chisel into the work, this conventional checking might waste the work. According to the present invention, however, the adjustment is conducted almost at the real time depending on the situation detected during the welding, so that the improper welding of the work can be prevented, and the above-described checking by cutting the work or putting the cold chisel into the work can be made unnecessary.

Accordingly, a laser welding method particularly comprises a step of welding upper and lower metal plates, a step of picking up an image of a molten pool near a molten hole from the side of the upper metal plate during an execution of the welding step, a step (steps **S3, S5**) of determining whether a welding state of the metal plates is proper or not by analyzing a generation state of the molten pool based on the image picked up in the picking-up step, and a step (steps **S6, S7**) of adjusting at least one of a parameter of the irradiated laserlazar beams and a feeding speed of the filler wire so that the welding state of the metal plates becomes proper in case the welding state determined in said determining step is not proper.

### EMBODIMENT 2

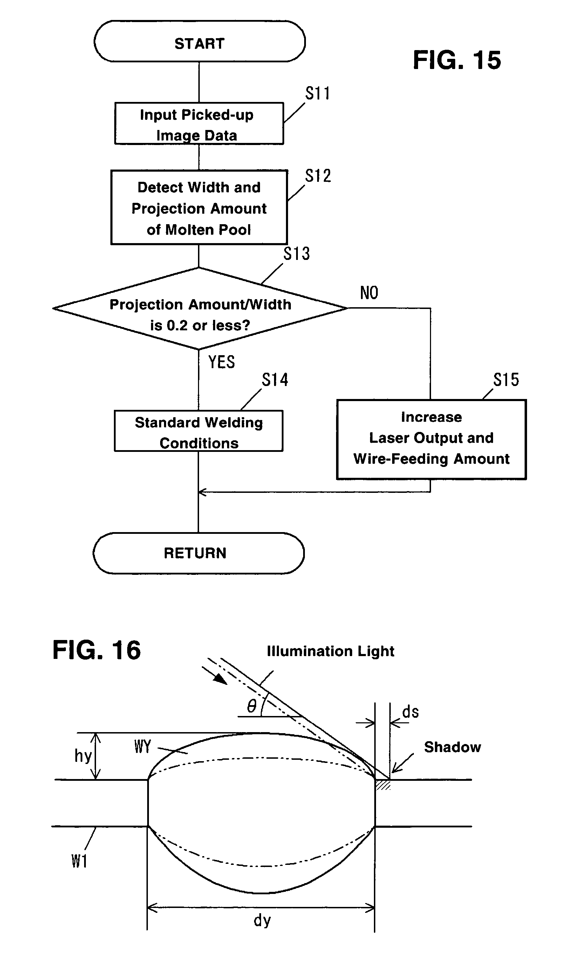

A second embodiment will be described. In the above-described first embodiment, it is determined whether or not the welding state of the upper and lower metal plates **W1, W2** is proper preferably by determining whether or not the width **dy** of the molten pool **WY** is within the range of twice through five times the laser-beam diameter **rb.** In the second embodiment, however, it is determined whether the welding state of the upper and lower metal plates **W1, W2** is proper or not based on the ratio of the amount of projection **hy** and the width **dy** of the molten pool **WY.** Hereinafter, the present embodiment will be described referring to a flowchart of FIG. **15****.**

At first, the updated image data obtained by the image picking-up device **8** is inputted in step **S11.**

In the next step **S12,** the inputted image data is analyzed, and the width **dy** of the molten pool **WY** at the position which is located the specified distance **da** behind the laser-beam center **LBc** and the amount of projection **hy** of the molten metal in the molten pool **WY** over the surface of the upper metal plate **W1** are detected. Herein, the specified distance **da** may be set in the same or similar manner as the first embodiment. Further, the detection of the width **dy** of the molten pool **WY** may be conducted in the same or similar manner as the first embodiment. Meanwhile, the projection amount **hy** of the molten pool **WY** is obtained geometrically or by using the data base based on the width **ds** of a shadow formed beside the molten pool **WY** by the illumination light of the lamp **9**, the width **dy** of the molten pool **WY,** and the angle **è** between the illumination light of the lamp **9** and the surface of the upper metal plate **W1.**

In the next step **S13,** it is determined whether or not the ratio which is obtained by dividing the projection amount **hy** of the molten pool **WY** by the width **dy** of the molten pool **WY** is 0.2 or less. When the ratio is 0.2 or less (YES), the standard conditions of welding are maintained in step **S14.** Meanwhile, when the ratio is greater than 0.2 (NO), the control sequence proceeds to step **S15.**

In the step **S15,** the laser output is increased and the feeding amount of the filler wire **X** per unit time is increased. According to the recognition of the inventors, in case the ratio obtained by dividing the projection amount **hy** of the molten pool **WY** by the width **dy** of the molten pool **WY** is greater than 0.2, the molten metal **Wy** of the molten pool **WY** dose not lower to the lower metal plate due to the surface tension, so that the proper welding of the upper and lower metal plates **W1, W2** via the bead **WB** cannot be provided. Therefore, like the step **S5** of the above-described first embodiment, the laser output is increased and the feeding amount of the filler wire **X** per unit time is increased. Consequently, the amount of the molten metal **Wy** can be increased and the molten metal **Wy** can be made lower downward easily.

According to the second embodiment, like the first embodiment, the molten metal **Wy** of the upper metal plate **W1** and the filler wire **X** can be made lower or flow or expand towards or to the lower metal plate **W2** beyond the clearance **Z,** so that the upper and lower metal plates **W1, W2** can be surely welded, thereby improving the welding quality.

### EMBODIMENT 3

A third embodiment will be described. In the third embodiment, the detecting method of the projection amount **hy** of the molten pool **WY** in the second embodiment is changed. That is, according to the present embodiment, a laser measuring device is attached to the moving device **4**. This laser measuring device emits the one or more laser beams to the molten pool **WY** and receives the reflected beams. Thereby, the projection amount **hy** of the molten pool **WY** is detectable. Herein, the flowchart of the present embodiment may be the same or similar as that of the above-described second embodiment. According to the third embodiment, the projection amount **hy** of the molten pool **WY** can be detected accurately, so that the accuracy of the determination of the welding state of the two metal plates **W1, W2** can be improved.

### EMBODIMENT 4

A fourth embodiment will be described. In the fourth embodiment, it is further determined in the third embodiment whether or not the ratio which is obtained by dividing the projection amount **hy** of the molten pool **WY** by the width **dy** of the molten pool **WY** substantially is -0.1 or less. According to the recognition of the inventors, in case the ratio obtained by dividing the projection amount **hy** of the molten pool **WY** by the width **dy** of the molten pool **WY** is -0.1 or less, that is, in case the upper face of the molten pool **WY** is considerably concave, there is a concern that the welding strength would become weak. The reason for this is considered that even if the molten metal **Wy** lowers to the lower meal plate **W2,** the clearance **Z** is great and thereby the amount of the molten metal would be short, so that the upper face of the molten pool **WY** would become considerably concave. Therefore, in this case, the laser output is increased and the feeding amount of the filler wire **X** per unit time is increased. Accordingly, the amount of the molten metal **Wy** is increased so that the ratio obtained by dividing the projection amount **hy** of the molten pool **WY** by the width **dy** of the molten pool **WY** can become greater than -0.1.

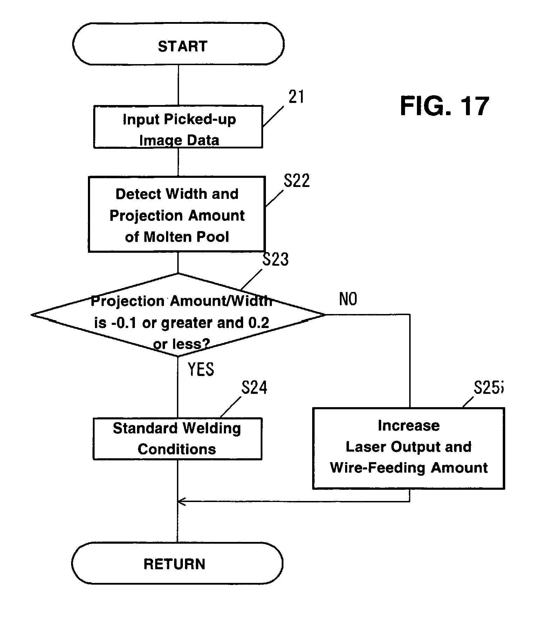

FIG. **17** is an exemplified flowchart of this control. The controls in steps **S21, S22** are the same as those in the steps **S11, S12** of FIG. **15****.** Herein, the detection of the projection amount **hy** of the molten pool **WY** is used by the laser measuring device similar to the one of the third embodiment. This is because the laser measuring device may detect the concave amount of the molten pool **WY.**

In the next step **S23,** it is determined whether or not the ratio which is obtained by dividing the projection amount **hy** of the molten pool **WY** by the width **dy** of the molten pool **WY** is within a range of -0.1 or greater and 0.2 or less (-0.1<= **dy**<=0.2). When the ratio is within this range, the standard conditions of welding are maintained in step **S24.** Meanwhile, when the ratio is out of this range, the control sequence proceeds to step **S25,** where the laser output is increased and the feeding amount of the filler wire **X** per unit time is increased like the second and third embodiments. Thus, any problem caused by the cases in which the ratio obtained by dividing the projection amount **hy** of the molten pool **WY** by the width **dy** of the molten pool **WY** is less than -0.1 or greater than 0.2 can be solved properly.

While the laser output is increased in the above-described first through fourth embodiments, the welding speed (the relative moving speed between the laser beams and the upper and lower metal plates) may be decreased instead of the increase of the laser output. Thereby, while the welding speed becomes slower, the heat feeding amount per unit to the metal plates **W1, W2** increases, so that the similar advantages to those described above can be provided. In this case, the feeding speed of the filler wire **X** may be changed proportionally.

Further, while a pair of metal plates which have the U-shaped cross section and the flanges overlapped is used as the work in the above-described embodiments, the present invention can be applied to any work having a different shape as long as the image of the surface of the upper metal plate **W1** can be picked up.

The present invention should not be limited to the above-descried embodiment, and any other modifications and improvements may be applied within the scope of a sprit of the present invention.

## Claims

1. A laser welding method of a pair of work elements **(W1, W2)** at least partly overlapped with a clearance **(Z)** therebetween, comprising:
a step of welding an overlapped portion of first and second work elements **(W1, W2)** with at least one laser beam **(LB)** and a filler wire **(X),** in which the laser beam **(LB)** is irradiated toward a surface of the first work element **(W1)** so as to move along a welding path **(R)** and the filler wire **(X)** is fed to a laser-beam irradiated portion **(L)** of the first work element **(W1)** such that a tip thereof follows the laser beam **(LB)** irradiated in such a manner that the laser-beam irradiated portion **(L)** of the first work element **(W1)** is molten such that a molten hole **(WK)** which penetrates the first work element **(W1)** is generated and the tip of the filler wire **(X)** is molten, so that a molten pool **(WY)** in which molten metal **(Wy)** of the first work element **(W1)** and the filler wire **(X)** is collected around the molten hole **(WK)** can be generated behind the laser-beam irradiated portion **(L)** in such a manner that the molten metal (**Wy**) of the first work element **(W1)** and the filler wire **(X)** flows across the clearance **(Z)** between the first and second work elements **(W1, W2);**
a step of picking up an image of the molten pool **(WY)** near the molten hole **(WK)** from the side of the first work plate **(W1)** during an execution of said welding step;
a step of determining whether a welding state of the first and second work elements **(W1, W2)** is proper or not by analyzing a generation state of the molten pool **(WY)** based on the image picked up in said picking-up step; and
a step of adjusting at least one of a parameter of the irradiated laser beam **(LB),** a relative speed between the irradiated laser beam **(LB)** and the fed filler wire **(X)** and the work elements **(W1, W2),** and a feeding speed of the filler wire **(X)** so that the welding state of the first and second work elements **(W1, W2)** becomes proper in case the welding state determined in said determining step is not proper.

2. The laser welding method of claim 1, wherein it is determined in said determining step that the welding state of the first and second work elements **(W1, W2)** is not proper in case the width **(dy)** of the molten pool **(WY)** which is detected based on the image picked up in said picking-up step is not within a range of twice through five times the diameter **(rb)** of the laser beam **(LB)** irradiated on the surface of the first work element **(W1).**

3. The laser welding method of any one of the preceding claims, wherein it is determined in said determining step that the welding state of the first and second work elements **(W1, W2)** is not proper in case a ratio which is obtained by dividing the amount of projection **(hy)** of the molten metal **(Wy)** in the molten pool **(WY)** over the surface of the first work element **(W1)** by the width **(dy)** of the molten pool **(WY)** is greater than 0.2, the amount of projection **(hy)** of the molten metal **(Wy)** in the molten pool **(WY)** and the width **(dy)** of the molten pool **(WY)** being detected based on the image picked up in said picking-up step.

4. The laser welding method of any one of the preceding claims, wherein in case it is determined that a ratio which obtained by dividing the amount of projection **(hy)** of the molten metal **(Wy)** in the molten pool **(WY)** over the surface of the first work element **(W1)** by the width **(dy)** of the molten pool **(WY)** is -0.1 or less, in the adjusting step a laser output is increased and/or the feeding speed of the filler wire **(X)** is increased.

5. The laser welding method of any one of the preceding claims, wherein in the adjusting step, the at least one of a parameter of the irradiated laser beam **(LB),** a relative speed between the irradiated laser beam **(LB)** and the fed filler wire **(X)** and the work elements **(W1, W2),** and a feeding speed of the filler wire **(X)** is adjusted so that the ratio of the width of a welding bead **(WB)** of the second work element **(W2)** at the surface thereof facing the first work element **(W1)** to the width of a welding bead **(WB)** of the first work element **(W1)** at the surface thereof on the irradiating side with the laser beam **(LB)** is not smaller than about 0,75.

6. The laser welding method of any one of the preceding claims, wherein the image picking step, the determining step and the adjusting step are executed repeatedly in the specified cycle which is smaller than about 1s, preferably smaller than about 0,5s, most preferably smaller than about 100ms.

7. A computer program product comprising computer-readable instructions which, when loaded and executed on a suitably system, control the execution of a laser welding method according to any one of the preceding claims.

8. A laser welding apparatus **(1)** of a pair of work elements **(W1, W2)** at least partly overlapped with a clearance **(Z)** therebetween, comprising:
means **(2, 3, 4, 5, 6)** for welding an overlapped portion of first and second work elements **(W1, W2)** with one or more laser beam **(LB)** and a filler wire **(X),** in which the laser beam **(LB)** is irradiated toward a surface of the first work element **(W1)** so as to move along a welding path **(R)** and the filler wire **(X)** is fed to a laser-beam irradiated portion **(L)** of the first work element **(W1)** such that a tip thereof follows the laser beam **(LB)** irradiated in such a manner that the laser-beam irradiated portion **(L)** of the first work element **(W1)** is molten such that a molten hole **(WK)** which penetrates the first work element **(W1)** is generated and the tip of the filler wire **(X)** is molten, so that a molten pool **(WY)** in which molten metal **(Wy)** of the first work element **(W1)** and the filler wire **(X)** is collected around the molten hole **(WK)** can be generated behind the laser-beam irradiated portion **(L)** in such a manner that the molten metal **(Wy)** of the first work element **(W1)** and the filler wire **(X)** flows across the clearance **(Z)** between the upper and lower metal plates **(W1, W2);**
means **(8)** for picking up an image of the molten pool **(WY)** near the molten hole **(WK)** from the side of the first work element **(W1)** during a welding execution by said welding means **(2, 3, 4, 5, 6)**;
means **(7)** for determining whether a welding state of the first and second work elements (W1, **W2)** is proper or not by analyzing a generation state of the molten pool **(WY)** based on the image picked up by said picking-up means **(8);** and
means **(7)** for adjusting at least one of a parameter of the irradiated laser beam **(LB),** a relative speed between the irradiated laser beam **(LB)** and the fed filler wire **(X)** and the work elements **(W1, W2),** and a feeding speed of the filler wire **(X)** so that the welding state of the first and second work elements **(W1, W2)** becomes proper in case the welding state determined by said determining means **(7)** is not proper.

9. The laser welding apparatus of claim 8, wherein the determining means **(7)** determine the welding state of the first and second work elements **(W1, W2)** as not being proper in case the width **(dy)** of the molten pool **(WY)** which is detected based on the image picked up by the picking up means **(8)** is not within a range of twice through five times the diameter **(rb)** of the laser beam **(LB)** irradiated on the surface of the first work element **(W1).**

10. The laser welding apparatus of claim 8 or 9, wherein the determining means **(7)** determine the welding state of the first and second work elements **(W1, W2)** as not being proper in case a ratio which is obtained by dividing the amount of projection **(hy)** of the molten metal **(Wy)** in the molten pool **(WY)** over the surface of the first work element **(W1)** by the width **(dy)** of the molten pool **(WY)** is greater than 0.2, the amount of projection **(hy)** of the molten metal **(Wy)** in the molten pool **(WY)** and the width **(dy)** of the molten pool **(WY)** being detected based on the image picked up by the picking up means **(8).**

11. The laser welding apparatus of any one of the preceding claims 8 to 10, wherein in case the determining means **(7)** determine that a ratio which obtained by dividing the amount of projection **(hy)** of the molten metal **(Wy)** in the molten pool **(WY)** over the surface of the first work element **(W1)** by the width **(dy)** of the molten pool **(WY)** is -0.1 or less, in the adjusting step a laser output is increased and/or the feeding speed of the filler wire **(X)** is increased.

12. The laser welding apparatus of any one of the preceding claims 8 to 11, wherein the adjusting means **(7)** adjust the at least one of a parameter of the irradiated laser beam **(LB),** a relative speed between the irradiated laser beam **(LB)** and the fed filler wire **(X)** and the work elements **(W1, W2),** and a feeding speed of the filler wire **(X)** so that the ratio of the width of a welding bead **(WB)** of the second work element **(W2)** at the surface thereof facing the first work element **(W1)** to the width of a welding bead **(WB)** of the first work element **(W1)** at the surface thereof on the irradiating side with the laser beam **(LB)** is not smaller than about 0,75.

13. The laser welding apparatus of any one of the preceding claims 8 to 12, wherein the means are configured such that the control process is executed repeatedly in the specified cycle which is smaller than about 1s, preferably smaller than about 0,5s, most preferably smaller than about 100ms.
